# FASCICULE DE BREVET EUROPEEN

(11) **EP 3 719 587 B1**
(45) Date de publication et mention de la délivrance du brevet: **24.05.2023**
(21) Numéro de dépôt: 20166331.7
(22) Date de dépôt: 27.03.2020
(51) Int. Cl.: G04B 31/04, G04B 17/04

(54) **DISPOSITIF ANTICHOC ET OSCILLATEUR MÉCANIQUE HORLOGER À GUIDAGE FLEXIBLE DISPOSANT D'UN TEL DISPOSITIF ANTICHOC**
STOSSDÄMPFUNGSVORRICHTUNG UND MECHANISCHER OSZILLATOR EINES UHRWERKS MIT FLEXIBLER FÜHRUNG, DER ÜBER EINE SOLCHE STOSSDÄMPFUNGSVORRICHTUNG VERFÜGT
SHOCK-ABSORBER DEVICE AND TIMEPIECE MECHANICAL OSCILLATOR WITH FLEXIBLE GUIDE HAVING SUCH A SHOCK-ABSORBER DEVICE

(30) Priorité: 04.04.2019 CH 4612019
(43) Date de publication de la demande: 07.10.2020
(73) Titulaire: CSEM Centre Suisse d'Electronique et de Microtechnique SA - Recherche et Développement, 2002 Neuchâtel (CH)
(72) Inventeur: MUSY, Grégory, 1052 Le-Mont-sur-Lausanne (CH); BARROT, François, 3235 Erlach (CH)
(74) Mandataire: P&TS SA (AG, Ltd.)

(56) Documents cités:
- EP-A1- 3 076 245
- EP-A1- 3 291 025
- EP-A1- 3 324 246
- EP-A2- 2 015 147

## Description

### Domaine technique

La présente invention concerne un dispositif antichoc avec butée rigide et un oscillateur mécanique horloger à guidage flexible disposant d'un tel dispositif antichoc. La présente invention concerne également un oscillateur mécanique horloger comprenant ledit dispositif antichoc.

### Etat de la technique

Dans le domaine de la micromécanique de haute précision, et celui de l'horlogerie en particulier, l'utilisation de dispositifs dits antichocs pour protéger des composants, par exemple ceux d'une montre, est bien connue.

Le document EP3076245 décrit un dispositif amortisseur de chocs et/ou de vibrations comprenant un élément flexible, apte à se déformer sous l'effet d'une contrainte, et une couche dite dissipative obtenue dans un matériau présentant un module de cisaillement inférieur au module de cisaillement de l'élément flexible, solidaire au moins partiellement dudit élément flexible.

Le document EP3324246 décrit des moyens de butée axiale rigide agencés pour la protection du mécanisme résonateur à lames contre les chocs axiaux selon la direction de l'axe.

Dans les cas des antichocs décrits dans EP3076245 et EP3324246, l'antichoc coopère avec un axe de pivotement rapporté au centre de l'oscillateur. La partie de l'axe qui entre en contact avec l'antichoc est toujours la même quel que soit l'intensité du choc, à savoir, le bout de l'axe pour les chocs axiaux et la portée terminale de l'axe pour les chocs radiaux. Le diamètre de la portée terminale de l'axe doit donc être suffisamment grand pour qu'aucun choc, quel que soit son intensité, ne puisse l'endommager. Cela implique un grand diamètre d'axe soit un grand bras de levier qui génère un couple de frottement important sur le balancier lors d'un choc.

Les chocs au porter (< 500G NIHS) peuvent se produire facilement et se répéter à fréquence élevée. Ainsi un couple de frottement important associé à des chocs au porter (< 500G NIHS) répétés à fréquence élevée peuvent conduire à une perte importante d'amplitude du balancier voir même à l'arrêt ou au blocage du mécanisme. Cela est d'autant plus critique pour les oscillateurs à guidage flexible qui fonctionnent généralement avec une faible amplitude nominale.

### Bref résumé de l'invention

Un but de la présente invention est de minimiser les frottements entre un oscillateur à guidage flexible et son antichoc et ainsi de réduire la perte d'amplitude de l'oscillateur suite aux chocs au porter, ce qui est particulièrement critique pour les oscillateurs à guidage flexible qui sont généralement dotés d'une part d'une faible amplitude nominale et d'autre part d'un échappement non auto-démarrant pouvant se bloquer si l'amplitude de l'oscillateur est trop faible.

La présente invention intègre un ressort viscoélastique et l'associe à une butée rigide de sorte que les chocs au porter soient repris par l'antichoc viscoélastique et les chocs accidentels par la butée rigide.

Les chocs au porter sont définis pas la norme NIHS 91-30, "Définition des accélérations linéaires rencontrées par une montre-bracelet lors de gestes brusques et de chocs au porter". Les chocs accidentels sont définis par la norme NIHS 91-20, "Définition des chocs linéaires types pour les composants de montres-bracelet". La norme NIHS 91-10 spécifie les exigences minimales applicables aux montres résistant aux chocs et décrit la méthode d'essai correspondante.

Selon l'invention, ces buts sont atteints notamment au moyen d'un dispositif antichoc comprenant un élément viscoélastique et une butée rigide, chacun étant configuré de manière à coopérer avec une portion de l'oscillateur; dans lequel l'élément viscoélastique est configuré de manière à se déformer élastiquement lorsque l'oscillateur est soumis, lors d'un choc, à une accélération entre 50 G et 500 G NIHS; dans lequel ladite portion coopère avec une butée rigide lorsque la portion subit une accélération au-delà d'au moins 500 G NIHS ; et dans lequel il n'y a aucun contact entre ladite portion de l'oscillateur et le dispositif antichoc pour une accélération inférieure à 50 G NIHS.

La présente invention concerne également un oscillateur mécanique horloger comprenant un balancier, une suspension à guidage flexible guidant et rappelant élastiquement le balancier dans un plan d'oscillation et pourvu d'une protection contre les chocs, l'oscillateur comprenant au moins un dispositif antichoc selon l'invention.

Dans ce contexte et contrairement aux antichocs décrits dans EP3076245 et EP3324246, l'antichoc de la présente invention interagit avec un axe rapporté disposant de deux portées différentes et caractérisées chacune par un diamètre spécifique. Ainsi, la portée d'axe caractérisée par le plus faible diamètre coopère avec le ressort viscoélastique pour les chocs au porter tandis que la portée d'axe caractérisée par le plus grand diamètre coopère avec la butée rigide pour les chocs accidentels. Cela permet de minimiser les frottements et donc la perte d'amplitude du balancier consécutive aux chocs au porter tout en garantissant que l'axe ne soit pas endommagé pour les chocs accidentels de grande intensité (> 500G NIHS).

Le fonctionnement de l'antichoc de la présente invention s'apparente à celui de l'antichoc Incabloc^{®} pour les chocs au porter de la gamme 20 G à 1000 G NIHS (ou 50 G à 500 G NIHS) et pour les chocs accidentels de 1000G à 5000G NIHS, à la différence près que l'antichoc de l'invention dissipe l'énergie des chocs au porter de 50 G à 500 G NIHS par la viscosité du ressort quel que soit la direction du choc alors que l'Incabloc^{®} ne dissipe que l'énergie des chocs radiaux par frottement sec et ne dissipe aucunement l'énergie des chocs axiaux. Dissiper l'énergie du choc est important car plus il y aura de rebonds post-choc entre l'oscillateur et l'antichoc, plus l'oscillateur frottera longtemps contre l'antichoc et plus grande sera la perte d'amplitude résultante de l'oscillateur. Pour les chocs au porter dans la gamme 0 G à 50 G NIHS le fonctionnement de la présente invention est complètement différent de celui de l'Incabloc^{®}. En effet, l'Incabloc^{®} doit assurer à la fois la fonction de guidage de l'axe du balancier et la fonction d'antichoc. Cela implique que le ressort de l'Incabloc^{®} est préchargé de sorte que le palier guidant le balancier ne se déplace pas pour des chocs au porter très faibles (< 50 G NIHS). Cela permet le guidage du balancier sauf en cas de forte perturbation (> 50 G NIHS).

Pour l'oscillateur de la présente invention, le guidage est assuré par le pivot flexible. Il n'y a donc aucun contact entre l'axe rapporté et l'antichoc pour les faibles chocs au porter (< 50 G NIHS). De ce fait, il n'est d'une part pas nécessaire de précharger le ressort viscoélastique et d'autre part le balancier est moins perturbé par ce type de chocs que dans le cas de l'Incabloc^{®}.

### Brève description des figures

Des exemples de mise en oeuvre de l'invention sont indiqués dans la description illustrée par les figures annexées dans lesquelles :
la figure 1 montre une vue de dessus d'un oscillateur mécanique comportant un dispositif antichoc, selon un mode de réalisation;
la figure 2 montre une vue du dessus de l'oscillateur mécanique de la figure 1, sans le dispositif antichoc;
la figure 3 montre une vue en coupe du dispositif antichoc, selon un mode de réalisation;
la figure 4 montre une vue en coupe de l'oscillateur mécanique horloger, selon un mode de réalisation; et
la figure 5 montre une vue en coupe de l'axe rapporté du balancier, selon une forme d'exécution;
la figure 6 illustre le dispositif antichoc, selon un autre mode de réalisation; et
la figure 7 illustre le dispositif antichoc, encore selon un autre mode de réalisation.

### Exemple(s) de mode de réalisation

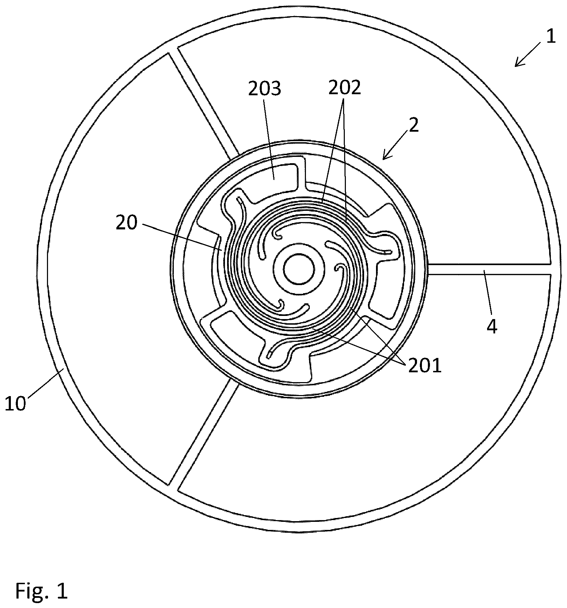

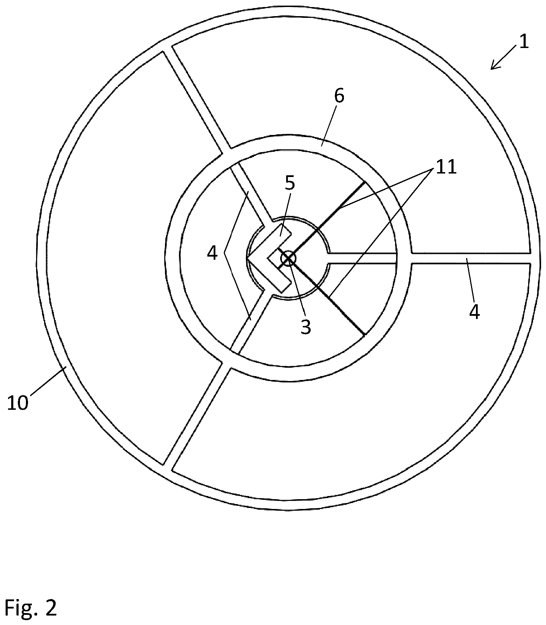

La **figure 1** montre une vue de dessus d'un oscillateur mécanique 1 à guidage flexible pour un mouvement horloger, selon une forme de réalisation. L'oscillateur mécanique 1 comporte un dispositif antichoc 2 destiné à protéger des chocs de l'oscillateur 1 mécanique horloger à guidage flexible. La **figure 2** montre une vue de dessus de l'oscillateur mécanique 1, sans le dispositif antichoc afin de rendre visible certains composants de l'oscillateur 1.

L'oscillateur comprend un balancier 10, une suspension à guidage flexible 11 guidant et rappelant élastiquement le balancier 10 dans un plan d'oscillation. La suspension à guidage flexible 11 relie le balancier 10 à une base 5 fixe de l'oscillateur 1. La base 5 est destinée à être fixée à une partie fixe du mouvement horloger. L'oscillateur 1 comprend un axe 3 lié rigidement au balancier 10 par une liaison rigide 4 qui rapporte cet axe 3 au centre de rotation du balancier 10. Dans l'exemple illustré, la suspension à guidage flexible comporte des lames élastiques 11 reliant la base 5 au balancier 10 par l'intermédiaire d'un anneau rigide 6 solidaire de la liaison rigide 4.

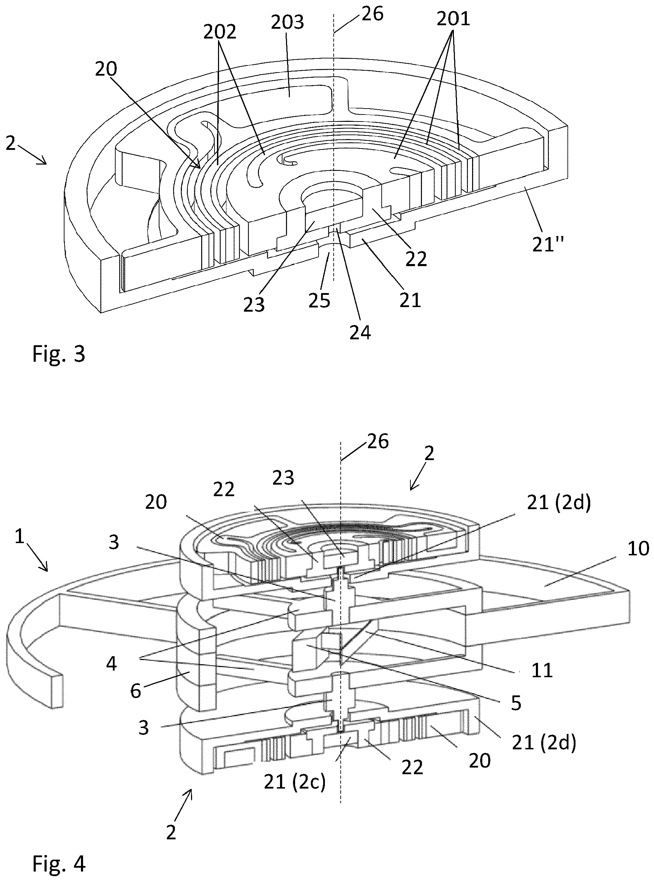

La **figure 3** montre une vue en coupe du dispositif antichoc 2, selon un mode de réalisation. Le dispositif antichoc 2 comprend un élément viscoélastique 20 et une butée rigide 21, chacun étant configuré de manière à coopérer avec une portion d'un oscillateur horloger (par exemple l'axe 3). L'élément viscoélastique 20 est configuré de manière à se déformer élastiquement lorsque l'oscillateur est soumis, lors d'un choc, à une accélération entre 50 G et 500 G NIHS, de sorte à amortir le choc. Pour une accélération au-delà d'au moins 500 G NIHS, l'oscillateur vient en butée sur la butée rigide 21.

Plus particulièrement, la raideur de l'élément viscoélastique 20 est ajustée de manière à ce que ladite portion de l'oscillateur (par exemple l'axe 3) coopère avec l'élément viscoélastique 20 lorsque l'oscillateur est soumis à une accélération entre 50 G et 500 G NIHS, et coopère avec la butée rigide 21 lorsque l'oscillateur est soumis à une accélération au-delà d'au moins 500 G NIHS.

Selon la forme d'exécution illustrée à la figure 3, l'élément viscoélastique 20 comprend une pluralité de lames flexibles 201, chacune comprenant un matériau viscoélastique 202. Une extrémité de chacune desdites lames flexibles est solidaire d'une pièce intermédiaire 22 destinée à coopérer avec la portion de l'oscillateur 1. Cette forme d'exécution de l'élément viscoélastique 20 est similaire à celle décrite dans le document EP3076245.

Toujours selon la configuration illustrée à la figure 3, la pièce intermédiaire 22 prend la forme d'un disque (ou cylindre) depuis lequel s'étendent la pluralité de lames flexibles 201 (trois lames flexibles 201 dans la figure 3). Les lames flexibles 201 peuvent être incurvées suivant un motif de spirale, le centre de la spirale étant confondu avec un axe central 26 de la pièce intermédiaire 22. Les lames incurvées peuvent comprendre un évidement formant un réservoir 203 débouchant entre deux lames flexibles 201 permettant l'écoulement, par exemple par capillarité, du matériau viscoélastique 202 entre les lames flexibles 201 lors du processus de fabrication.

Dans cette configuration, lorsque l'oscillateur est soumis à une accélération entre 50 G et 500 G NIHS, l'élément viscoélastique 20 amortit le choc par la déformation du matériau viscoélastique 202 des lames flexibles 201. Lorsque l'oscillateur est soumis à une accélération au-delà d'au moins 500 g, les lames flexibles 201 sont suffisamment défléchies pour qu'un contact se produise entre la portion (l'axe 3) de l'oscillateur et la butée rigide 21.

Plus particulièrement, lorsque l'oscillateur est soumis à une accélération entre 50 G et 500 G NIHS, les lames flexibles 201 peuvent être défléchies radialement et axialement (par exemple, par rapport à l'axe central 26). Dans cette configuration, l'élément viscoélastique 20 amortit un choc subi par l'oscillateur dans la direction axiale et dans la direction radiale, c'est-à-dire selon le plan dans lequel s'étendent les lames flexibles 201, plan perpendiculaire à l'axe central 26.

A cette fin, les lames flexibles 201 peuvent avoir une raideur axiale et un raideur radiale qui sont ajustées de manière à ce que la portion de l'oscillateur (l'axe 3) coopère avec l'élément viscoélastique 20 lorsque l'oscillateur est soumis à une accélération, respectivement axiale et radiale, entre 50 G et 500 G NIHS, et coopère avec la butée rigide 21 lorsque l'oscillateur est soumis à une accélération, respectivement axiale et radiale, au-delà d'au moins 500 G NIHS.

Toujours selon la configuration illustrée à la figure 3, la pièce intermédiaire 22 comporte un premier logement 24 configuré pour coopérer avec la portion de l'oscillateur (l'axe 3). La butée rigide 21 prend la forme d'un disque disposé sous l'élément viscoélastique 20. La butée rigide 21 comporte un second logement 25 également configuré pour coopérer avec la portion de l'oscillateur (l'axe 3).

Selon une forme d'exécution, le premier logement 24 est borgne. Une pierre 23 peut être positionnée dans le fond du premier logement 24.

Les lames flexibles 201 peuvent être réalisées en silicium. Le matériau viscoélastique 202 peut alors être compris entre les lames flexibles 201 ou dans les lames flexibles 201. Par exemple, le matériau viscoélastique 202 peut être déposé dans une cavité formée dans la lame flexible 201. Notons que, comme le silicium supporte peu les déformations plastiques locales, la pièce intermédiaire 22 (et la pierre 23) qui est appelée à être en contact direct avec la portion de l'oscillateur, peut être fabriquée dans un matériau autre que le silicium, plus résiliant que le silicium. De manière avantageuse, le matériau viscoélastique 202 présente un module de cisaillement faible, i.e. un module de cisaillement de préférence inférieur à 10 GPa, un facteur de perte d'au moins 0.1. De préférence, le matériau viscoélastique 202 présente un module de cisaillement au moins 10 fois inférieur au module de cisaillement de la ou des lames flexibles 201. A cette fin, le matériau viscoélastique 202 peut comprendre un polymère, de préférence un élastomère.

Alternativement, les lames flexibles 201 peuvent être réalisées dans un métal ou alliage métallique, par exemple à l'aide d'un procédé de type LIGA ou par découpe laser.

Le rôle des lames flexibles 201 est de permettre un déplacement de l'élément viscoélastique 202 lorsque l'oscillateur 1 est soumis, lors d'un choc, à une accélération entre 20G et 1000G (typiquement entre 50G et 500G), ce qui permet d'amortir le choc (dissipation de tout ou partie de l'énergie du choc) sans bloquer et/ou freiner le principal mode d'oscillation de l'oscillateur 1. La **figure 4** montre une vue en coupe de l'oscillateur mécanique horloger 1 à guidage flexible, selon une forme de réalisation dans lequel l'oscillateur 1 comprend deux axes 3, chacun étant lié rigidement au balancier 10 par la liaison rigide 4. Les deux axes 3 et les deux liaisons rigides 4 sont arrangés de manière coaxiale. Chacun des deux axes 3 coopère avec un dispositif antichoc 2. Autrement dit, l'oscillateur 1 comprend un axe 3 supérieur coopérant avec un dispositif antichoc 2 supérieur et un axe 3 inférieur coopérant avec un dispositif antichoc 2 inférieur.

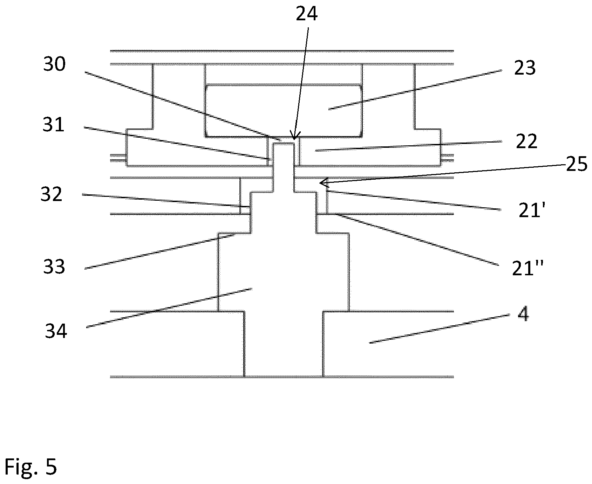

La **figure 5** montre une vue en coupe de l'axe 3 supérieur et de la partie centrale du dispositif antichoc 2 supérieur, selon une forme d'exécution.

Selon une forme d'exécution, chaque axe 3 comprend au moins un bout d'axe 30, une portée terminale 31 ayant un faible diamètre et lié au bout d'axe 30, une portée proximale 32 de plus grand diamètre que la portée terminale 31 et d'un épaulement 33 liant la portée proximale 32 à la base 34 de l'axe 3.

Lorsque l'oscillateur 1 subit un choc dans la direction radiale avec une accélération radiale entre 50 G et 500 G NIHS, la portée terminale 31 coopère avec l'élément viscoélastique 20. La portée proximale 32 coopère avec la butée rigide 21 lorsque l'accélération radiale est au-delà d'au moins 500 G NIHS. Par exemple, la portée terminale 31 coopère avec les bords latéraux du premier logement 24 et la portée proximale 32 coopère avec les bords latéraux 21' du second logement 25.

Lorsque l'oscillateur 1 subit un choc dans la direction axiale avec une accélération axiale entre 50 G et 500 G NIHS, le bout d'axe 30 coopère avec l'élément viscoélastique 20. L'épaulement 33 coopère avec la butée rigide 21 lorsque l'accélération radiale est au-delà d'au moins 500 G NIHS. Par exemple, le bout d'axe 30 coopère avec le fond (la pierre 23) du premier logement 24 et l'épaulement 33 coopère avec un plan inférieur 21" de la butée rigide 21.

Notons que pour des chocs de très faible intensité (< 50 G NIHS), l'axe 3 ne rentre pas en contact avec le dispositif antichoc 2. Ce sont les propriétés de masse et de raideur de l'oscillateur 1 de même que les jeux entre l'axe 3 et la pièce intermédiaire 22 (et la pierre 23) qui détermine ce niveau de choc pour un premier contact entre l'oscillateur 1 et le dispositif antichoc 2.

Ce sont les propriétés de masse et de raideur de l'oscillateur 1, les jeux entre l'axe 3 et la butée rigide 21 et finalement les raideurs axiales et radiales de l'élément viscoélastique 20 qui déterminent ce niveau de choc pour un premier contact entre l'oscillateur 1 et la butée rigide 21. Ainsi l'élément viscoélastique 20 sert avant tout à éviter que l'axe 3 n'entre en contact avec la butée rigide 21 pour les chocs au porter au moins inférieurs à 500 G NIHS.

Le dispositif antichoc 2 peut se déformer et amortir les vibrations post-chocs radialement et axialement ; il permet également de dissiper les mouvements de rotation tip/tilt (bascule/inclinaison) qui peuvent survenir (et même se superposer aux mouvements radiaux et axiaux) suite à des chocs de l'oscillateur sur la butée. Le comportement du dispositif antichoc 2 peut être similaire pour des chocs axiaux ou radiaux.

Par rapport aux antichocs connus, l'oscillateur 1 de l'invention comprenant deux dispositifs antichocs 2 permet de réduire le diamètre de la portée terminale 31 collaborant avec l'antichoc afin de minimiser les frottements pour les chocs au moins inférieurs à 500 G NIHS. Il y a également une meilleure dissipation de l'énergie des chocs axiaux, radiaux bascule/inclinaison au moins inférieurs à 500 G NIHS par rapport aux antichocs connus.

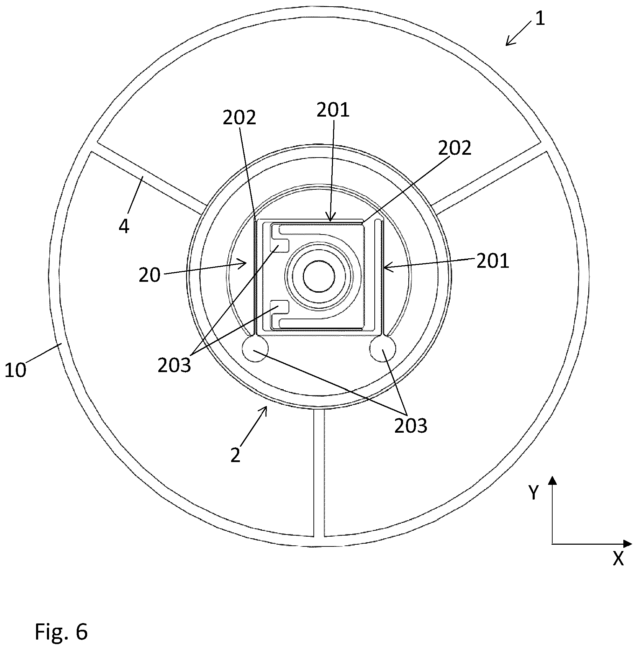

D'autres configurations possibles de l'élément viscoélastique 20 permettant de réaliser la fonction de guidage flexible des lames flexibles 201 sont également envisageables. Par exemple, la figure 6 montre une vue de dessus de l'oscillateur 1 comprenant le dispositif antichoc 2 dans lequel les lames flexibles 201 incurvées suivant un motif de spirale sont remplacées par une structure en table XY. Dans l'exemple de la **figure 6****,** l'élément viscoélastique 20 comporte une paire de lames flexibles 201 essentiellement parallèles, orientées selon un axe X et une paire de lames flexibles 201 essentiellement parallèles, orientées selon un axe Y. Des réservoirs 203 permettent l'écoulement du matériau viscoélastique 202 entre chacune des paires de lames flexibles 201.

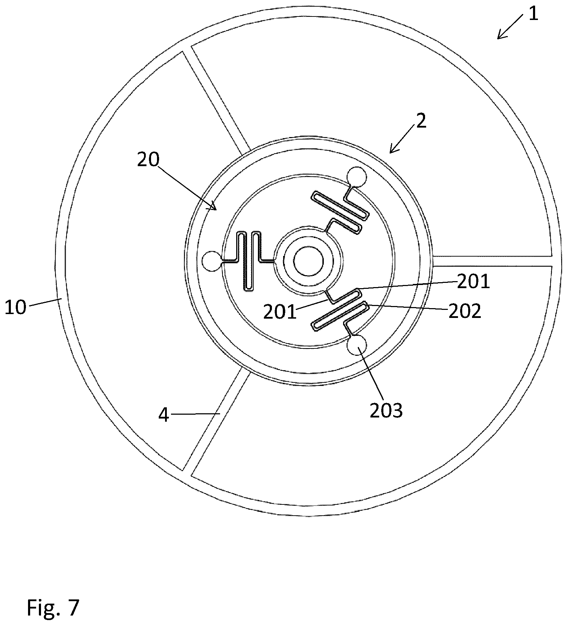

Encore dans un autre exemple montré à la **figure 7****,** les lames flexibles 201 incurvées suivant un motif de spirale sont remplacées par une structure en étoile. Plus particulièrement, le dispositif antichocs 2 comporte des lames flexibles 201 en accordéon. Des réservoirs 203 permettent l'écoulement du matériau viscoélastique 202 entre deux lames flexibles 201 parallèles.

Dans les variantes du dispositif antichocs 2 montrées aux figures 6 et 7, l'élément viscoélastique 20 peut être dimensionné de manière à avoir une souplesse équivalente à celle de l'élément viscoélastique 20 dans lequel les lames flexibles 201 ont une configuration en spirale. Tout comme l'implémentation de l'antichoc décrit dans les figures 1 à 5, les variantes du dispositif antichocs 2 représenté dans les figures 6 et 7, permettent ainsi de reprendre les déplacements "tip-tilt-pistons "et radiaux du balancier 10 suite à un choc, tout en dissipant (par effet viscoélastique) l'énergie du choc. Par exemple, le dimensionnement de l'élément viscoélastique 20 peut se baser sur le choix judicieux des paramètres suivants : le nombre de lames flexibles 201, le type de matériau viscoélastique, le matériau constitutif des lames, la géométrie de ces lames, telle que leur épaisseur, leur largeur, leur hauteur, leur longueur et le rapport entre ces dimensions.

Les réservoirs 203 peuvent être dimensionnés pour permettre, comme dans la configuration en spirale de l'élément viscoélastique 20, le dépôt d'un polymère viscoélastique, par exemple par capillarité, entre les deux faces en vis à vis des lames élastiques 201, réalisant ainsi une structure en sandwich donc le matériau viscoélastique 202 constitue l'âme.

### Numéros de référence employés sur les figures

- 1: oscillateur
- 10: balancier
- 11: suspension à guidage flexible
- 2: dispositif antichoc
- 20: élément viscoélastique, ressort viscoélastique
- 201: lame flexible
- 202: matériau viscoélastique
- 203: réservoir
- 21: butée rigide
- 21': bords latéraux du second logement
- 21": plan inférieur de la butée rigide
- 22: pièce intermédiaire
- 23: pierre
- 24: premier logement
- 25: second logement
- 26: axe central
- 3: axe
- 30: bout d'axe
- 31: portée terminale
- 32: portée proximale
- 33: épaulement
- 34: base de l'axe
- 4: liaison rigide
- 5: base
- 6: anneau rigide

## Revendications

1. Dispositif antichoc destiné à protéger des chocs un oscillateur mécanique horloger à guidage flexible, le dispositif antichoc comprenant:
un élément viscoélastique (20) et une butée rigide (21), chacun étant configuré de manière à coopérer avec une portion (3) de l'oscillateur;
dans lequel l'élément viscoélastique (20) est configuré de manière à se déformer, lorsque l'oscillateur est soumis, lors d'un choc, à une accélération entre 50 G et 500 G NIHS (norme NIHS 91-30, avril 2003);
dans lequel ladite portion (3) coopère avec la butée rigide (21) lorsque la portion (3) subit une accélération au-delà d'au moins 500 G NIHS (norme NIHS 91-20, mars 2003); et
dans lequel il n'y a aucun contact entre ladite portion (3) de l'oscillateur et le dispositif antichoc (2) pour une accélération inférieure à 50 G NIHS.

2. Dispositif antichoc selon la revendication 1,
dans lequel la raideur de l'élément viscoélastique (20) est ajustée de manière à ce que la portion (3) de l'oscillateur coopère avec l'élément viscoélastique (20) lorsque l'oscillateur est soumis à une accélération entre 50 G et 500 G NIHS, et coopère avec la butée rigide (21) lorsque l'oscillateur est soumis à une accélération au-delà d'au moins 500 G NIHS.

3. Dispositif antichoc selon la revendication 1 ou 2,
dans lequel l'élément viscoélastique (20) comprend une pluralité de lames flexibles, chacune comprenant un matériau viscoélastique.

4. Dispositif antichoc selon la revendication 3,
dans lequel une extrémité de chacune desdites lames flexibles est solidaire d'une pièce intermédiaire (22) destinée à coopérer avec la portion (3) de l'oscillateur.

5. Dispositif antichoc selon la revendication 4,
dans lequel la pièce intermédiaire (22) a la forme d'un cylindre de révolution depuis lequel s'étendent ladite pluralité de lames flexibles, la pièce intermédiaire (22) comportant un premier logement (24) configuré pour coopérer avec ladite portion (3).

6. Dispositif antichoc selon la revendication 4 ou 5,
dans lequel les lames flexibles sont incurvées suivant un motif de spirale, le centre de la spirale étant confondu avec un axe central (26) de la pièce intermédiaire (22) et du logement (24).

7. Dispositif antichoc selon la revendication 5 ou 6,
dans lequel la butée rigide (21) a la forme d'un cylindre de révolution et comporte un second logement (25) configuré pour coopérer avec ladite portion (3).

8. Oscillateur mécanique horloger (1) comprenant un balancier (10), une suspension à guidage flexible (11) guidant et rappelant élastiquement le balancier (10) dans un plan d'oscillation et pourvu d'une protection contre les chocs,
caractérisé en que
l'oscillateur (1) comprend au moins un dispositif antichoc selon l'une des revendications 1 à 7.

9. Oscillateur (1) selon la revendication 8,
comprenant un axe (3) lié rigidement au balancier (10), l'axe (3) coopérant avec l'élément viscoélastique (20) et la butée rigide (21).

10. Oscillateur (1) selon la revendication 9,
dans lequel l'axe (3) comprend une portée terminale (31) coopérant avec l'élément viscoélastique (20) lorsque l'axe (3) subit une accélération radiale entre 50 G et 500 G NIHS, et une portée proximale (32) coopérant avec la butée rigide (21) lorsque l'axe (3) subit une accélération radiale au-delà d'au moins 500 G NIHS.

11. Oscillateur (1) selon la revendication 10,
dans lequel l'axe (3) comprend un bout d'axe (30) coopérant avec l'élément viscoélastique (20) lorsque l'axe (3) subit une accélération axiale entre 50 G et 500 G NIHS; et
dans lequel la portée proximale (32) est de plus grand diamètre que la portée terminale (31) de manière à former un épaulement (33), l'épaulement (33) coopérant avec la butée rigide (21) lorsque l'axe (3) subit une accélération axiale au-delà d'au moins 500 G NIHS.

12. Oscillateur (1) selon la revendication 10 ou 11,
dans lequel la pièce intermédiaire (22) a la forme d'un cylindre de révolution comportant un premier logement (24), la portée terminale (31) coopérant avec le premier logement (24).

13. Oscillateur (1) selon l'une des revendications 10 à 12,
dans lequel la butée rigide (21) a la forme d'un cylindre de révolution et comporte un second logement (25) concentrique avec le premier logement (24) et de plus grand diamètre que ce dernier, la portée proximale (32) coopérant avec le second logement (25).

14. Oscillateur (1) selon les revendications 11 et 12,
dans lequel le premier logement (24) est borgne, et
dans lequel le bout d'axe (30) coopère avec le fond de premier logement (24).

15. Oscillateur (1) selon la revendication 14,
dans lequel le fond de premier logement (24) comporte une pierre (23).

16. Oscillateur (1) selon les revendications 11 et 13,
dans lequel l'épaulement (33) coopère avec un plan inférieur (21") de la butée rigide (21).

17. Oscillateur (1) selon l'une des revendications 8 à 16, comportant deux antichocs (2) disposés de chaque côté du balancier (10).

## Patentansprüche

1. Stoßschutzvorrichtung zum Schutz eines mechanischen Oszillators einer Uhr mit flexibler Führung vor Stößen, wobei die Stoßschutzvorrichtung Folgendes umfasst:
ein viskoelastisches Element (20) und einen starren Anschlag (21), die jeweils so konfiguriert sind, dass sie mit einem Abschnitt (3) des Oszillators zusammenwirken;
wobei das viskoelastische Element (20) so konfiguriert ist, dass es sich verformt, wenn der Oszillator bei einem Stoß eine Beschleunigung zwischen 50 G und 500 G NIHS (NIHS-Standard 91-30, April 2003) erfährt;
wobei der Abschnitt (3) mit dem starren Anschlag (21) zusammenwirkt, wenn der Abschnitt (3) eine Beschleunigung von mehr als mindestens 500 G NIHS (NIHS-Standard 91-20, März 2003) erfährt; und
wobei es bei einer Beschleunigung von weniger als 50 G NIHS keinen Kontakt zwischen dem Abschnitt (3) des Oszillators und der Stoßdämpfervorrichtung (2) gibt.

2. Die Stoßschutzvorrichtung nach Anspruch 1, wobei die Steifigkeit des viskoelastischen Elements (20) so eingestellt ist, dass der Abschnitt (3) des Oszillators mit dem viskoelastischen Element (20) zusammenwirkt, wenn der Oszillator eine Beschleunigung zwischen 50 G und 500 G NIHS erfährt, und mit dem starren Anschlag (21) zusammenwirkt, wenn der Oszillator eine Beschleunigung von zumindest 500 G NIHS erfährt.

3. Die Stoßschutzvorrichtung nach Anspruch 1 oder 2, das viskoelastische Element (20) eine Vielzahl von flexiblen Klingen umfasst, von denen jede ein viskoelastisches Material umfasst.

4. Die Stoßschutzvorrichtung nach Anspruch 3, wobei ein Ende jeder der biegsamen Klingen fest mit einem Zwischenstück (22) verbunden ist, das dazu ausgebildet ist, mit dem Abschnitt (3) des Oszillators zusammenzuwirken.

5. Die Stoßschutzvorrichtung nach Anspruch 4, wobei das Zwischenstück (22) die Form eines Rotationszylinders einnimmt, von dem sich die mehreren flexiblen Klingen erstrecken, und wobei das Zwischenstück (22) eine erste Lagerung (24) aufweist, die so konfiguriert ist, dass sie mit dem Abschnitt (3) zusammenwirkt.

6. Die Stoßschutzvorrichtung nach Anspruch 4 oder 5, wobei die flexiblen Klingen in einem Spiralmuster gekrümmt sind, wobei das Zentrum der Spirale mit einer zentralen Achse (26) des Zwischenstücks (22) und der Lagerung (24) übereinstimmt.

7. Die Stoßschutzvorrichtung nach Anspruch 5 oder 6, wobei der starre Anschlag (21) die Form eines Rotationszylinders einnimmt und eine zweite Lagerung (25) aufweist, die so gestaltet ist, dass sie mit dem genannten Abschnitt (3) zusammenwirkt.

8. Mechanischer Uhrenoszillator (1) aufweisend eine Unruh (10), eine Aufhängung mit flexibler Führung (11), die die Unruh (10) in einer Schwingungsebene elastisch führt und zurückstellt, und die mit einem Stoßschutz versehen ist, **dadurch gekennzeichnet, dass**
der Oszillator (1) mindestens eine Stoßschutzvorrichtung nach einem der Ansprüche 1 bis 7 umfasst.

9. Der Oszillator (1) nach Anspruch 8, aufweisend eine Achse (3), die starr mit der Unruh (10) verbunden ist, wobei die Achse (3) mit dem viskoelastischen Element (20) und dem starren Anschlag (21) zusammenwirkt.

10. Der Oszillator (1) nach Anspruch 9, wobei die Achse (3) eine Endauflage (31), die mit dem viskoelastischen Element (20) zusammenwirkt, wenn die Achse (3) eine radiale Beschleunigung zwischen 50 G und 500 G NIHS erfährt, aufweist, sowie eine proximale Auflage (32), die mit dem starren Anschlag (21) zusammenwirkt, wenn die Achse (3) eine radiale Beschleunigung über mindestens 500 G NIHS hinaus erfährt, aufweist.

11. Der Oszillator (1) nach Anspruch 10, wobei die Achse (3) ein Achsenende (30) aufweist, das mit dem viskoelastischen Element (20) zusammenwirkt, wenn die Achse (3) eine axialen Beschleunigung zwischen 50 G und 500 G NIHS erfährt; und
wobei die proximale Auflage (32) einen größeren Durchmesser als die Endauflage (31) aufweist, um eine Schulter (33) zu bilden, wobei die Schulter (33) mit dem starren Anschlag (21) zusammenwirkt, wenn die Achse (3) eine axiale Beschleunigung über mindestens 500 G NIHS erfährt.

12. Der Oszillator (1) nach Anspruch 10 oder 11, wobei das Zwischenstück (22) die Form eines Rotationszylinders mit einer ersten Lagerung (24) aufweist, und wobei das Endauflage (31) mit der ersten Lagerung (24) zusammenwirkt.

13. Der Oszillator (1) nach einem der Ansprüche 10 bis 12, wobei der starre Anschlag (21) die Form eines Rotationszylinders einnimmt und eine zweite Lagerung (25) aufweist, die konzentrisch mit der ersten Lagerung (24) ist und einen größeren Durchmesser als diese hat, wobei die proximale Auflage (32) mit der zweiten Lagerung (25) zusammenwirkt.

14. Der Oszillator (1) nach den Ansprüchen 11 oder 12, wobei die erste Lagerung (24) blind ist, und wobei das Achsenende (30) mit dem Boden der ersten Lagerung (24) zusammenwirkt.

15. Der Oszillator (1) nach Anspruch 14, in dem der Boden der ersten Lagerung (24) einen Stein (23) aufweist.

16. Der Oszillator (1) nach den Ansprüche 11 und 13, in dem die Schulter (33) mit einer unteren Ebene (21") des starren Anschlags (21) zusammenwirkt.

17. Der Oszillator (1) nach einem der Ansprüche 8 bis 16, aufweisend zwei Stoßdämpfer (2), die zu beiden Seiten der Unruh (10) angeordnet sind.

## Claims

1. An anti-shock device for protecting a flexibly guided mechanical watch oscillator from shock, the anti-shock device comprising:
a viscoelastic member (20) and a rigid stop (21), each configured to cooperate with a portion (3) of the oscillator;
wherein the viscoelastic element (20) is configured to deform when the oscillator is subjected to an acceleration of between 50 G and 500 G NIHS (NIHS Standard 91-30, April 2003) during an impact;
wherein said portion (3) engages the rigid stop (21) when the portion (3) is accelerated beyond at least 500 G NIHS (NIHS Standard 91-20, March 2003); and
wherein there is no contact between said portion (3) of the oscillator and the shock absorber (2) for an acceleration of less than 50 G NIHS.

2. The anti-shock device of claim 1, wherein the stiffness of the viscoelastic member (20) is adjusted so that the oscillator portion (3) engages the viscoelastic member (20) when the oscillator is subjected to an acceleration between 50 G and 500 G NIHS, and engages the rigid stop (21) when the oscillator is subjected to an acceleration above at least 500 G NIHS.

3. The anti-shock device of claim 1 or 2, wherein the viscoelastic element (20) comprises a plurality of flexible blades, each comprising a viscoelastic material.

4. The anti-shock device of claim 3, wherein one end of each of said flexible blades is integral with an intermediate piece (22) adapted to cooperate with the portion (3) of the oscillator.

5. The anti-shock device of claim 4, wherein the intermediate piece (22) is in the form of a cylinder of revolution from which said plurality of flexible blades extend, the intermediate piece (22) comprising a first housing (24) configured to cooperate with said portion (3).

6. The anti-shock device of claims 4 or 5, wherein the flexible blades are curved in a spiral pattern, the centre of the spiral being coincident with a central axis (26) of the intermediate piece (22) and the housing (24).

7. The anti-shock device of claim 5 or 6, wherein the rigid stop (21) has the shape of a cylinder of revolution and comprises a second housing (25) configured to cooperate with said portion (3).

8. Mechanical oscillator (1) for a clockwork comprising a balance wheel (10), a flexibly guided suspension (11), which guides and elastically biases the balance wheel (10) into an oscillation plane, and which is provided with a shock protection, **characterised in that**
the oscillator (1) comprises at least one shock protection device according to any one of the claims 1 to 7.

9. The oscillator (1) according to claim 8, comprising a shaft (3) rigidly connected to the balance wheel (10), the shaft (3) cooperating with the viscoelastic element (20) and the rigid stop (21).

10. The oscillator (1) according to claim 9, wherein the shaft (3) comprises an end step (31) cooperating with the viscoelastic element (20) when the shaft (3) undergoes a radial acceleration between 50 G and 500 G NIHS, and a proximal step (32) cooperating with the rigid stop (21) when the shaft (3) undergoes a radial acceleration above at least 500 G NIHS.

11. The oscillator (1) according to claim 10, wherein the shaft (3) comprises an end of the shaft (30) which co-operates with the viscoelastic element (20) when the shaft (3) is subjected to an axial acceleration of between 50 G and 500 G NIHS; and
wherein the proximal step (32) is of larger diameter than the end step (31) so as to form a shoulder (33), and wherein the shoulder (33) is co-operating with the rigid stop (21) when the shaft (3) undergoes an axial acceleration in excess of at least 500 G NIHS.

12. The oscillator (1) according to claim 10 or 11, wherein the intermediate piece (22) is in the form of a cylinder of revolution provided with a first housing (24), the end step (31) cooperating with the first housing (24).

13. The oscillator (1) according to any of the claims 10 to 12,
wherein the rigid stop (21) has the shape of a cylinder of revolution and comprises a second housing (25) concentric with the first housing (24) and of greater diameter than the latter, and wherein the proximal step (32) is cooperating with the second housing (25).

14. The oscillator (1) of claims 11 or 12, wherein he first housing (24) is blind, and wherein the end of the shaft (30) engages the bottom of the first housing (24).

15. The oscillator (1) of claim 14, wherein the bottom of the first housing (24) comprises a stone (23).

16. The oscillator (1) of claims 11 and 13, in which the shoulder (33) cooperates with a lower plane (21") of the rigid stop (21).

17. The oscillator (1) according to any of the claims 8 to 16, comprising two shock absorbers (2) on either side of the balance wheel (10).
